# EUROPEAN PATENT APPLICATION

(11) **EP 4 699 908 A1**
(43) Date of publication of application: **25.02.2026**
(21) Application number: 24792051.5
(22) Date of filing: 17.04.2024
(51) Int. Cl.: B62D 25/20

(54) **VEHICLE BODY STRUCTURE AND VEHICLE**

(30) Priority: 18.04.2023 CN 202310457410
(71) Applicant: BYD Company Limited, Shenzhen, Guangdong 518118 (CN)
(72) Inventor: YI, Bengang, Shenzhen, Guangdong 518118 (CN); QUAN, Yi, Shenzhen, Guangdong 518118 (CN); LIU, Tengyong, Shenzhen, Guangdong 518118 (CN); HU, Xin, Shenzhen, Guangdong 518118 (CN); DU, Zhaojun, Shenzhen, Guangdong 518118 (CN)
(74) Representative: Mathys & Squire
(86) International application number: PCT/CN2024/088394
(87) International publication number: WO 2024/217466

(57) **Abstract**

Provided are a vehicle body structure and a vehicle. The vehicle body structure includes an upper rocker panel and a lower rocker panel, where the lower rocker panel is connected to the upper rocker panel, and in a height direction of a vehicle, at least a part of the upper rocker panel is higher than the lower rocker panel; and in a direction from a front end to a tail end of the vehicle, a height of the upper rocker panel gradually increases.

## Description

### CROSS-REFERENCE TO RELATED APPLICATIONS

This application claims priority to Chinese Patent Application NO. 202310457410.8, filed by BYD Company Limited on April 18, 2023, and entitled "VEHICLE BODY STRUCTURE AND VEHICLE", which is incorporated herein by reference in its entirety.

### TECHNICAL FIELD

This application relates to the field of vehicle technologies, and in particular, to a vehicle.

### BACKGROUND

In the prior art, vehicles cannot provide sufficient protection for occupants in the event of side collisions.

### SUMMARY

This application is intended to solve one of technical problems in the related art at least to some extent.

In view of this, this application provides a vehicle body structure.

The vehicle body structure according to an embodiment of this application includes: an upper rocker panel and a lower rocker panel, wherein the lower rocker panel is connected to the upper rocker panel, and in a height direction of a vehicle, at least a part of the upper rocker panel is higher than the lower rocker panel; and in a direction from a front end to a tail end of the vehicle, a height of the upper rocker panel gradually increases.

According to the vehicle body structure in the embodiment of this application, a double-layer rocker panel structure having the upper rocker panel and the lower rocker panel can be formed to provide double-layer protection.

This application further provides a vehicle. The vehicle includes the foregoing vehicle body structure.

Additional aspects and advantages of this application will be set forth in part in the following description, and in part will become apparent from the following description, or may be learned through the practice of this application.

### BRIEF DESCRIPTION OF DRAWINGS

FIG. 1 is a schematic diagram of a vehicle body structure according to an embodiment of this application;
FIG. 2 is a sectional view along a plane A-A in FIG. 1;
FIG. 3 is a partial schematic diagram of a vehicle body structure according to an embodiment of this application;
FIG. 4 is another schematic diagram of a vehicle body structure according to an embodiment of this application;
FIG. 5 is a sectional view along a plane C-C in FIG. 4;
FIG. 6 is a sectional view along a plane D-D in FIG. 4;
FIG. 7 is a still another schematic diagram of a vehicle body structure according to an embodiment of this application; and
FIG. 8 is a sectional view along a plane B-B in FIG. 7.

### DESCRIPTION OF EMBODIMENTS

Embodiments of this application are described in detail below, examples of which are shown in accompanying drawings, where same or similar reference numerals throughout represent same or similar elements or elements having same or similar functions. The embodiments described below with reference to the accompanying drawings are exemplary and are intended to explain this application, and shall not be construed as a limitation on this application.

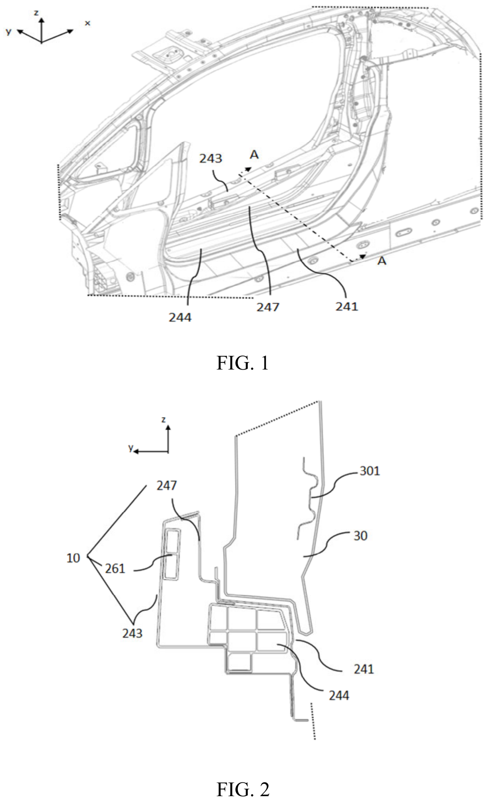

With reference to FIG. 1 to FIG. 8, an embodiment of this application provides a vehicle body structure used in a vehicle. The vehicle body structure provided in the embodiment of this application may be a side structure of the vehicle, for example, may be a carbon cabin side structure, that is, the vehicle body structure may be made of a carbon fiber material.

The vehicle body structure includes: an upper rocker panel 10 and a lower rocker panel 20, wherein the lower rocker panel 20 is connected to the upper rocker panel 10, and in a height direction of the vehicle, at least a part of the upper rocker panel 10 is higher than the lower rocker panel 20; and in a direction from a front end to a tail end of the vehicle, a height of the upper rocker panel 10 gradually increases.

The vehicle in which the vehicle body structure is used has a length direction, a width direction, and a height direction. The length direction of the vehicle may be an X direction in the drawings, the width direction of the vehicle may be a Y direction in the drawings, and the height direction of the vehicle may be a Z direction in the drawings.

As shown in FIG. 1, the vehicle body structure provided in the embodiment of this application includes an upper rocker panel 10 and a lower rocker panel 20. The lower rocker panel 20 is connected to the upper rocker panel 10 to form a double-layer rocker panel structure, to provide double-layer protection for an occupant compartment. The lower rocker panel 20 may include a rocker panel beam 244, and the rocker panel beam 244 may be made of an aluminum material. The rocker panel beam 244 is generally disposed at the bottom of the upper rocker panel 10, such that the bottom of the rocker panel beam 244 is located near a height level of a battery pack mounting point, to facilitate mounting and fastening of related structures such as a battery pack. An upper part of the rocker panel beam 244 is located near a lower part of a vehicle door 30.

As shown in FIG. 2, an interior of the rocker panel beam 244 of the lower rocker panel 20 may be of a multi-cavity sectional structure, such that the rocker panel beam 244 itself can serve as a lower-layer protective structure of a rocker panel. When a collision occurs, the rocker panel beam 244 itself is capable of sufficiently absorbing energy and buffering, thereby forming a protective effect on a lower part of an occupant and a battery and other structures under a floor, and improving the safety of the vehicle in which the vehicle body structure is used.

As shown in FIG. 1 and FIG. 2, in the height direction of the vehicle body structure, at least a part of the upper rocker panel 10 is higher than the lower rocker panel 20, such that the upper rocker panel 10 is located above the lower rocker panel 20 wherein the rocker panel beam 244 is located. In this way, a double-layer rocker panel structure having the upper rocker panel 10 and the lower rocker panel 20 can be formed, and the upper rocker panel 10 and the lower rocker panel 20 can jointly protect a side portion of the vehicle body structure to better prevent the occupant in the vehicle from being squeezed by the vehicle door or a colliding object during the collision, improving the safety of the vehicle in which the vehicle body structure is used.

In addition, in the embodiment of this application, in the direction from the front end to the tail end of the vehicle body structure, the height of the upper rocker panel 10 gradually increases, that is, the upper rocker panel 10 uses a lower-front and a higher-rear design. Therefore, a lower front part of the upper rocker panel 10 can facilitate passing of legs when the occupant enters and exits from the vehicle, and a higher rear part of the upper rocker panel 10 can better protect the occupant in the occupant compartment, improving the comfort and the safety of the vehicle in which the vehicle body structure is used.

It should be noted that in the embodiment of this application, only one side (a left side) of the vehicle body structure is used as an example. Considering self-symmetry of the vehicle body structure, the other side (a right side) should also be the same as the left side, that is, the right side should also include the same structure as the left side. Details are not described herein again.

In the width direction of the vehicle, a size of the upper rocker panel 10 is less than or equal to one half of a sum of sizes of the lower rocker panel 20 and the upper rocker panel 10.

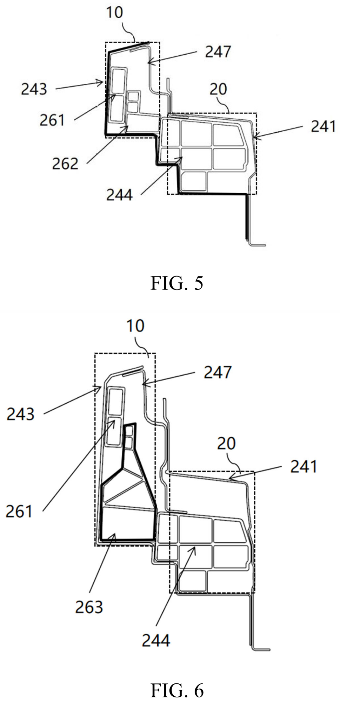

As shown in FIG. 2 and FIG. 6, in the embodiment of this application, in the width direction (the Y direction in FIG. 2) of the vehicle body structure, the size of the upper rocker panel 10 is less than or equal to one half of the sum of the sizes of the lower rocker panel 20 and the upper rocker panel 10, that is, a maximum size of the upper rocker panel 10 in the width direction of the vehicle body structure is one half of the sum of the sizes of the lower rocker panel 20 and the upper rocker panel 10. Therefore, the upper rocker panel 10 with a certain width and the lower rocker panel 20 can be used to form a relatively reliable double-layer protective rocker panel structure, the self-width of the upper rocker panel 10 can be controlled to avoid the excessively large width of the upper rocker panel 10 from affecting setting of other structures inside the vehicle body structure, and the development of miniaturization of the vehicle in which the vehicle body structure is used is also facilitated.

As shown in FIG. 2, in the width direction of the vehicle, at least a part of the upper rocker panel 10 is located on one side of the lower rocker panel 20 close to the occupant compartment, that is, the upper rocker panel 10 is closer to the occupant compartment than the lower rocker panel 20, such that the upper rocker panel 10 having the gradually increasing height can be used to provide reliable protection for the occupant in the occupant compartment.

In the height direction of the vehicle, a top surface of the upper rocker panel 10 is arc-shaped.

As shown in FIG. 1, in the embodiment of this application, in the height direction of the vehicle, the top surface of the upper rocker panel 10 may be arc-shaped, such that in the direction from the front end to the tail end of the vehicle body structure, the height of the upper rocker panel 10 can gradually increase. In this way, when the upper rocker panel 10 is used to realize overall heightening of the rocker panel, an arc design of the top surface of the upper rocker panel 10 can also facilitate passing of the occupant and provide better protection for the occupant, improving the safety of the vehicle in which the vehicle body structure is used.

The vehicle body structure includes an A-pillar 253 and a C-pillar 254, wherein one end of the upper rocker panel 10 is connected to the A-pillar 253, and the other end of the upper rocker panel 10 is connected to the C-pillar 254.

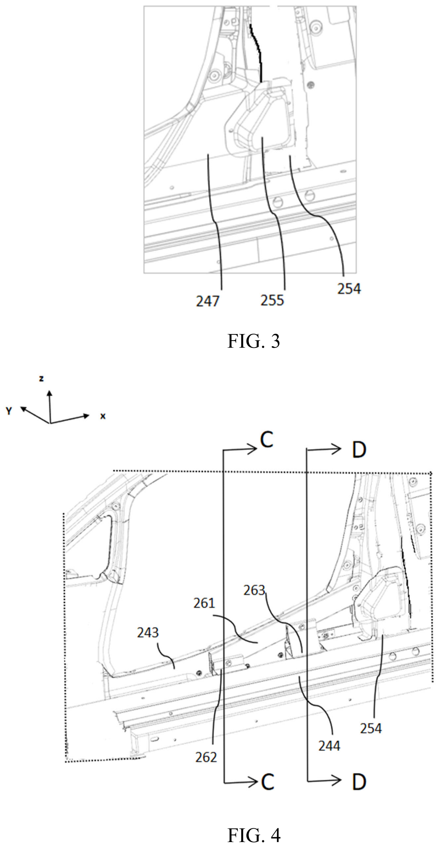

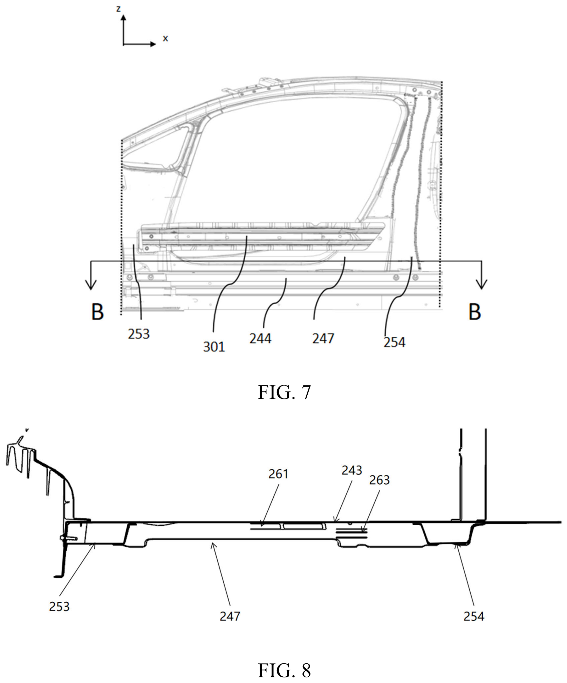

As shown in FIG. 3 and FIG. 7, in the embodiment of this application, the vehicle body structure may include the A-pillar 253 and the C-pillar 254 that are disposed oppositely, wherein both the A-pillar 253 and the C-pillar 254 are disposed on an outer side of the side wall inner panel 243, and the A-pillar 253 and the C-pillar 254 may be disposed oppositely around a door opening to form overall strengthening for an outer peripheral side of the door opening.

As shown in FIG. 7 and FIG. 8, one end of the upper rocker panel 10 may be connected to the A-pillar 253, and the other end of the upper rocker panel 10 may be connected to the C-pillar 254, such that the A-pillar 253 and the C-pillar 254 on two sides can be connected via the upper rocker panel 10. Therefore, the outer peripheral side of the door opening can be structurally strengthened overall to reduce an external impact force at the door opening during a side collision, thereby better protecting the occupant inside. In addition, the A-pillar 253 and the C-pillar 254 on the two sides can be connected via the upper rocker panel 10, such that the overall stiffness and strength of the vehicle body structure can be improved.

In one embodiment, the connection lengths of two sides of an inner rocker panel sealing plate 247 in the upper rocker panel 10 to the A-pillar 253 and the C-pillar 254 may also be adjusted. For example, in the length direction of the vehicle body structure (the X direction in the drawings), the connection length of the inner rocker panel sealing plate 247 to the A-pillar 253 may range from 25 mm to 40 mm, and/or the connection length of the inner rocker panel sealing plate 247 to the C-pillar 254 may range from 25 mm to 40 mm, such that sufficient connection lengths of the inner rocker panel sealing plate 247 to the A-pillar 253 and the C-pillar 254 can be ensured, thereby ensuring the connection reliability thereof.

The vehicle body structure further includes a side collision box 255, wherein the side collision box 255 is disposed at a connection position between the upper rocker panel 10 and the C-pillar 254, and the side collision box 255 is located on one side of the C-pillar 254 away from the occupant compartment of the vehicle.

As shown in FIG. 3, in the embodiment of this application, the side collision box 255 may be further disposed at the connection position between the upper rocker panel 10 and the C-pillar 254. The side collision box 255 is disposed at a connection portion between the upper rocker panel 10 and the C-pillar 254, such that the connection portion between the upper rocker panel 10 and the C-pillar 254 can be strengthened by the side collision box 255, thereby improving the reliability of the connection portion.

In addition, the side collision box 255 is disposed at the connection portion between the upper rocker panel 10 and the C-pillar 254, and the side collision box 255 is located on one side of the C-pillar 254 away from the occupant compartment of the vehicle, such that external impact can be also dispersed and transmitted in different directions by the side collision box 255 during the collision, thereby improving the impact resistance of the vehicle in which the vehicle body structure is used, and improving the overall stiffness and safety of the vehicle body structure.

The upper rocker panel 10 includes the side wall inner panel 243 and the inner rocker panel sealing plate 247, and the inner rocker panel sealing plate 247 and the side wall inner panel 243 are connected to form a cavity.

As shown in FIG. 1, in the embodiment of this application, the upper rocker panel 10 may include the side wall inner panel 243 and the inner rocker panel sealing plate 247, the inner rocker panel sealing plate 247 is connected to the side wall inner panel 243, and both the inner rocker panel sealing plate 247 and the side wall inner panel 243 are positioned above the lower rocker panel 20 to form a double-layer rocker panel structure together with the lower rocker panel 20, thereby providing double-layer protection for the occupant compartment.

As shown in FIG. 2, in the embodiment of this application, the cavity can be formed between the inner rocker panel sealing plate 247 and the side wall inner panel 243 to jointly form an upper-layer protective structure of the rocker panel. In the height direction of the vehicle body structure (the Z direction in the drawings), the inner rocker panel sealing plate 247 is located above the rocker panel beam 244, such that the foregoing cavity is also located above the lower rocker panel 20 wherein the rocker panel beam 244 is located. In this way, the double-layer rocker panel structure having the upper rocker panel 10 and the lower rocker panel 20 can be formed, and the double-layer rocker panel structure formed by the upper rocker panel 10 and the lower rocker panel 20 can jointly protect the side portion of the vehicle body structure to better prevent the occupant in the vehicle from being squeezed by the vehicle door or the colliding object during the collision, improving the safety of the vehicle in which the vehicle body structure is used.

The upper rocker panel 10 further includes an inner rocker panel support beam 261, wherein the inner rocker panel support beam 261 is located in the cavity, and in the direction from the front end to the tail end of the vehicle, a height of the inner rocker panel support beam 261 gradually increases.

As shown in FIG. 2 and FIG. 4, in the embodiment of this application, the inner rocker panel support beam 261 may be further disposed in the cavity enclosed by the inner rocker panel sealing plate 247 and the side wall inner panel 243, and the inner rocker panel support beam 261 is configured to strengthen the inner rocker panel sealing plate 247. A front end of the inner rocker panel support beam 261 is connected to the rocker panel beam 244, and a rear end of the inner rocker panel support beam 261 is connected to the C-pillar 254, such that the inner rocker panel support beam 261 is connected between the rocker panel beam 244 and the C-pillar 254. Therefore, the impact resistance of the cavity enclosed by the inner rocker panel sealing plate 247 and the side wall inner panel 243 can be enhanced by the inner rocker panel support beam 261, and the overall strength and stiffness of the upper rocker panel 10 can be also improved.

Furthermore, the rear end of the inner rocker panel support beam 261 is higher than the front end of the inner rocker panel support beam 261, that is, in the direction from the front end to the tail end of the vehicle body structure, the height of the inner rocker panel support beam 261 can gradually increase as a height of the inner rocker panel sealing plate 247, such that the inner rocker panel support beam 261 can better match the height change of the inner rocker panel sealing plate 247.

In another embodiment, a first inner rocker panel support beam lower connector 262 and a second inner rocker panel support beam lower connector 263 may be disposed on the inner rocker panel support beam 261. The first inner rocker panel support beam lower connector 262 and the second inner rocker panel support beam lower connector 263 are separately connected to the rocker panel beam 244, such that the structural stability of the inner rocker panel support beam 261 can be enhanced, thereby enhancing the impact resistance of the cavity enclosed by the inner rocker panel sealing plate 247 and the side wall inner panel 243.

As shown in FIG. 4 and FIG. 5, in the embodiment of this application, the vehicle body structure may further include the first inner rocker panel support beam lower connector 262, wherein the first inner rocker panel support beam lower connector 262 is connected between the inner rocker panel support beam 261 and the rocker panel beam 244, such that the connection portion between the rocker panel beam 244 and the inner rocker panel support beam 261 can be strengthened by the first inner rocker panel support beam lower connector 262, thereby ensuring the connection reliability of the inner rocker panel support beam 261.

As shown in FIG. 4 and FIG. 6, in the embodiment of this application, the vehicle body structure may further include the second inner rocker panel support beam lower connector 263, wherein the second inner rocker panel support beam lower connector 263 is connected between the inner rocker panel support beam 261 and the rocker panel beam 244, such that the connection portion between the rocker panel beam 244 and the inner rocker panel support beam 261 can be strengthened by the second inner rocker panel support beam lower connector 263, thereby ensuring the connection reliability of the inner rocker panel support beam 261.

Moreover, in a front-rear direction of the vehicle, the second inner rocker panel support beam lower connector 263 may be disposed between the first inner rocker panel support beam lower connector 262 and the C-pillar 254, such that the second inner rocker panel support beam lower connector 263 and the first inner rocker panel support beam lower connector 262 can jointly support connection between the rocker panel beam 244 and the inner rocker panel support beam 261 from a middle part and an end part respectively. In addition, the second inner rocker panel support beam lower connector 263 may be higher than the first inner rocker panel support beam lower connector 262, such that the connection position between the second inner rocker panel support beam lower connector 263 and the inner rocker panel support beam 261 is higher than the connection position between the first inner rocker panel support beam lower connector 262 and the inner rocker panel support beam 261. Therefore, the first inner rocker panel support beam lower connector 262 and the second inner rocker panel support beam lower connector 263 can better adapt to an increase in the height of the inner rocker panel support beam 261, and mounting and dismounting of the first inner rocker panel support beam lower connector 262 and the second inner rocker panel support beam lower connector 263 are also facilitated.

In the width direction of the vehicle, at least a part of the first inner rocker panel support beam lower connector 262 is located between the inner rocker panel support beam 261 and the rocker panel beam 244.

In the width direction of the vehicle, at least a part of the second inner rocker panel support beam lower connector 263 is located between the inner rocker panel support beam 261 and the rocker panel beam 244.

As shown in FIG. 5 and FIG. 6, in the embodiment of this application, at least a part of the first inner rocker panel support beam lower connector 262 may be located between the inner rocker panel support beam 261 and the rocker panel beam 244, or at least a part of the second inner rocker panel support beam lower connector 263 may be located between the inner rocker panel support beam 261 and the rocker panel beam 244, or at least a part of the first inner rocker panel support beam lower connector 262 and at least a part of the second inner rocker panel support beam lower connector 263 may be both located between the inner rocker panel support beam 261 and the rocker panel beam 244, such that connection between the inner rocker panel support beam 261 and the rocker panel beam 244 can be enhanced by the first inner rocker panel support beam lower connector 262 and/or the second inner rocker panel support beam lower connector 263 correspondingly.

In some embodiments, the inner rocker panel support beam 261 includes at least one cavity extending in the front-rear direction of the vehicle. In some embodiments, the first inner rocker panel support beam lower connector 262 includes at least one cavity extending in the front-rear direction of the vehicle, and the second inner rocker panel support beam lower connector 263 includes at least one cavity extending in the front-rear direction of the vehicle.

As shown in FIG. 5 and FIG. 6, in the embodiment of this application, the inner rocker panel support beam 261 may include at least one cavity extending in the front-rear direction of the vehicle, for example, the inner rocker panel support beam 261 may include two vertically arranged cavities extending in the front-rear direction of the vehicle, or more cavities, such that the strength of the inner rocker panel support beam 261 can be enhanced. The first inner rocker panel support beam lower connector 262 and the second inner rocker panel support beam lower connector 263 each may include at least one cavity extending in the front-rear direction of the vehicle, that is, the first inner rocker panel support beam lower connector 262 and the second inner rocker panel support beam lower connector 263 each may include a plurality of cavities extending in the front-rear direction of the vehicle, to correspondingly adapt to the connection with the inner rocker panel support beam 261 and the rocker panel beam 244. Meanwhile, design of the plurality of cavities can also improve the overall strength of the first inner rocker panel support beam lower connector 262 and the second inner rocker panel support beam lower connector 263.

For example, the first inner rocker panel support beam lower connector 262 and the second inner rocker panel support beam lower connector 263 each may be designed to have a multi-cavity structure with a small upper part and a big lower part, such that convenient connection of the first inner rocker panel support beam lower connector 262 and the second inner rocker panel support beam lower connector 263 to the inner rocker panel support beam 261 can be ensured, and the reliability of the connection of the first inner rocker panel support beam lower connector 262 and the second inner rocker panel support beam lower connector 263 to the rocker panel beam 244 can also be improved, thereby ensuring the connection strength at the connection position.

The vehicle body structure further includes a side wall outer panel 241, wherein the side wall outer panel 241 is disposed on one side of the rocker panel beam 244 of the lower rocker panel 20 away from the side wall inner panel 243, and the side wall outer panel 241 is connected to the inner rocker panel sealing plate 247.

As shown in FIG. 1 and FIG. 2, in the embodiment of this application, the vehicle body structure may further include the side wall outer panel 241, and the side wall outer panel 241 and the side wall inner panel 243 jointly form a side wall structure. The side wall outer panel 241 may be disposed on one side of the rocker panel beam 244 away from the side wall inner panel 243, and the side wall outer panel 241 is connected to the inner rocker panel sealing plate 247, such that the rocker panel beam 244, the inner rocker panel sealing plate 247 and other structures can be protected by the side wall outer panel 241, and the side wall outer panel 241 can also provide protection during the collision, thereby improving the safety of the vehicle in which the vehicle body structure is used.

In addition, the side wall outer panel 241 is connected to the inner rocker panel sealing plate 247 to ensure that higher collision impact can be transmitted to the inner rocker panel sealing plate 247 via the side wall outer panel 241, such that the inner rocker panel sealing plate 247 can be used to absorb energy and buffer the higher collision impact, thereby improving the safety of the vehicle (for example, a sports car) in which the vehicle body structure is used.

In the height direction of the vehicle, at least a part of the upper rocker panel 10 is higher than a seat cushion.

As shown in FIG. 7, a height of the seat cushion generally means that of a surface of a seat carrying the occupant, and in the height direction of the vehicle body structure, at least a part of the upper rocker panel 10 is higher than the seat cushion, such that the inner rocker panel sealing plate 247 in the upper rocker panel 10 can be used to provide certain protection for the occupant in the occupant compartment, thereby reducing impact of an external force on the occupant during the side collision.

The vehicle body structure further includes the vehicle door 30, wherein the vehicle door 30 is disposed on one side of the side wall outer panel 241 away from the inner rocker panel sealing plate 247, the vehicle door 30 is further provided with a door anti-collision beam 301, and a projection of the door anti-collision beam 301 in the width direction of the vehicle at least partially overlaps a projection of the upper rocker panel 10 in the width direction of the vehicle.

As shown in FIG. 2, in the embodiment of this application, the vehicle body structure further includes the vehicle door 30, wherein the vehicle door 30 is disposed on one side of the side wall outer panel 241 away from the inner rocker panel sealing plate 247, that is, the vehicle door 30 is located on an outer side of the side wall outer panel 241. When the collision occurs, the vehicle door 30 can protect the vehicle body structure as first protection.

As shown in FIG. 7 and FIG. 8, in the embodiment of this application, the door anti-collision beam 301 is further disposed on an inner side of the vehicle door 30, wherein the door anti-collision beam 301 may be fastened to the vehicle door 30 as an independent structure, and the door anti-collision beam 301 and the vehicle door 30 may also be integrally formed.

A projection of the door anti-collision beam 301 in the width direction of the vehicle body structure at least partially overlaps a projection of the upper rocker panel 10 in the width direction of the vehicle body structure, that is, a front end of the door anti-collision beam 301 at least partially overlaps the A-pillar 253 in the length direction of the vehicle body structure and a rear end of the door anti-collision beam 301 at least partially overlaps the C-pillar in the length direction of the vehicle body structure, wherein an amount of partial overlap may be 100 mm to 200 mm. In this way, force transmission paths from the vehicle door 30 to the door anti-collision beam 301 and from the door anti-collision beam 301 to each structure in the vehicle can be formed to facilitate dispersion and buffering of the collision impact, thereby reducing impact on the occupant in the door opening, and also improving the safety of the vehicle in which the vehicle body structure is used.

In addition, an amount of overlap between the front end of the door anti-collision beam 301 and the A-pillar 253 in the length direction of the vehicle body structure can be adjusted, and an amount of overlap between the rear end of the door anti-collision beam 301 and the C-pillar 254 in the length direction of the vehicle body structure can also be adjusted, to adjust an amount of overlap between the projection of the door anti-collision beam 301 in the width direction of the vehicle body structure and the projection of the inner rocker panel sealing plate 247 of the upper rocker panel 10 in the width direction of the vehicle body structure, such that the force transmission capability of the door anti-collision beam 301 can be adjusted and the self-stiffness of the door anti-collision beam 301 can be also adjusted. For example, the amount of the overlap between the projection of the door anti-collision beam 301 in the width direction of the vehicle body structure and the projection of the inner rocker panel sealing plate 247 in the width direction of the vehicle body structure can be increased to enhance the force transmission capability of the door anti-collision beam 301 and enhance the self-stiffness of the door anti-collision beam 301.

An embodiment of this application provides a vehicle. The vehicle includes the foregoing vehicle body structure.

An embodiment of this application provides a determining method of an upper surface curve of an inner rocker panel sealing plate 247 using the foregoing vehicle body structure. The determining method includes the following steps:
acquiring a predetermined upper surface position of the inner rocker panel sealing plate 247 of the vehicle body structure, wherein the predetermined upper surface position includes a predetermined first point, a predetermined second point, and a predetermined third point; the predetermined first point is a lowest stress point on the inner rocker panel sealing plate 247 during a front vehicle collision, the predetermined second point is a projection position of a central contact point between a human body and the seat during a collision, and the predetermined third point is a critical point at which the human body enters and exits from the vehicle;
the predetermined first point, the predetermined second point, and the predetermined third point are all virtual position points determined based on a human body-vehicle relationship when the human body enters and exits from the vehicle and collision requirements; and the predetermined first point is the lowest stress point on the inner rocker panel sealing plate 247 during the front vehicle collision, and a height of the predetermined first point may be 430 mm; the predetermined second point is the projection position of the central contact point between the human body and the seat during the collision, and is generally an area corresponding to buttocks of the human body when the seat moves to a half position of the human body, and a height of the predetermined second point may be between 430 mm and 530 mm; the predetermined third point is the critical point at which the human body enters and exits from the vehicle, and is generally a certain distance backward from a front wheel hub position; the distance is related to a wheelbase of the vehicle; when the wheelbase is less than 2500 mm, the distance is 1448 mm; when the wheelbase is greater than 2900 mm, the distance is 1648 mm; when the wheelbase is between 2500 mm and 2900 mm, the distance is a sum of one half of the wheelbase and 198 mm; for the predetermined third point, reference may also be made to an area corresponding to the buttocks of the human body when the seat moves to a last position of the human body; and a height of the predetermined third point may be 530 mm and a height of the buttocks of the human body when the occupant is seated; and
determining an actual upper surface curve of the inner rocker panel sealing plate 247, wherein the actual upper surface curve includes a first height point, a second height point, and a third height point; the first height point, the second height point, and the third height point respectively correspond to the predetermined first point, the predetermined second point, and the predetermined third point in a one-to-one manner; the first height point is higher than the predetermined first point, the second height point is higher than the predetermined second point, and the third height point is higher than the predetermined third point; and the first height point, the second height point, and the third height point are sequentially connected to form the actual upper surface curve of the inner rocker panel sealing plate 247, that is, a lowest limitation position of an upper surface of the inner rocker panel sealing plate 247 is determined; and
the first height point is set to be higher than the predetermined first point, the second height point is set to be higher than the predetermined second point, and the third height point is set to be higher than the predetermined third point; a boundary (namely, the lowest limitation position of the upper surface of the inner rocker panel sealing plate 247) of the inner rocker panel sealing plate 247 and a height transition trend can be basically determined by positions of the three points; and the height within such a range can provide protection during most side and front collisions to ensure the safety of the vehicle.

In this application, unless otherwise clearly specified and limited, a first feature being "above" or "below" a second feature may be direct contact between the first feature and the second feature, or indirect contact between the first feature and second feature through an intermediate medium. Furthermore, the first feature being "over", "above", and "higher than" the second feature may mean the first feature being directly above or obliquely above the second feature, or merely indicates that a horizontal height of the first feature is greater than that of the second feature. The first feature being "under", "below", and "lower than" the second feature may mean the first feature being directly below or obliquely below the second feature, or merely indicates that the horizontal height of the first feature is less than that of the second feature.

In the description of this specification, the description with reference to terms such as "one embodiment", "some embodiments", "an example", "a specific example", or "some examples" means that specific features, structures, materials or characteristics described in combination with the embodiment or example are included in at least one embodiment or example of this application. In this specification, the schematic representations of the foregoing terms are not necessarily aimed at the same embodiment or example. Moreover, specific features, structures, materials or characteristics described may be combined in any one or more embodiments or examples in a suitable manner. In addition, a person skilled in the art may conjugate and combine different embodiments or examples described in this specification and features of the different embodiments or examples without conflicting with each other.

Although the embodiments of this application have been shown and described above, it will be understood that the foregoing embodiments are exemplary and cannot be construed as restrictions to this application. Those of ordinary skill in the art may change, modify, replace and vary the foregoing embodiments within the scope of this application.

## Claims

1. A vehicle body structure, comprising:
an upper rocker panel and a lower rocker panel, wherein the lower rocker panel is connected to the upper rocker panel, and in a height direction of a vehicle, at least a part of the upper rocker panel is higher than the lower rocker panel; and
in a direction from a front end to a tail end of the vehicle, a height of the upper rocker panel gradually increases.

2. The vehicle body structure according to claim 1, wherein in a width direction of the vehicle, a size of the upper rocker panel is less than or equal to one half of a sum of sizes of the lower rocker panel and the upper rocker panel.

3. The vehicle body structure according to claim 1 or 2, wherein in the width direction of the vehicle, at least a part of the upper rocker panel is located on one side of the lower rocker panel close to an occupant compartment.

4. The vehicle body structure according to any one of claims 1 to 3, wherein in the height direction of the vehicle, a top surface of the upper rocker panel is arc-shaped.

5. The vehicle body structure according to any one of claims 1 to 4, further comprising an A-pillar and a C-pillar, wherein one end of the upper rocker panel is connected to the A-pillar, and the other end of the upper rocker panel is connected to the C-pillar.

6. The vehicle body structure according to claim 5, further comprising a side collision box, wherein the side collision box is disposed at a connection position between the upper rocker panel and the C-pillar, and the side collision box is located on one side of the C-pillar away from the occupant compartment of the vehicle.

7. The vehicle body structure according to claim 5 or 6, wherein the upper rocker panel comprises a side wall inner panel and an inner rocker panel sealing plate, and the inner rocker panel sealing plate and the side wall inner panel are connected to form a cavity.

8. The vehicle body structure according to claim 7, wherein the upper rocker panel further comprises an inner rocker panel support beam, the inner rocker panel support beam is located in the cavity, and in the direction from the front end to the tail end of the vehicle, a height of the inner rocker panel support beam gradually increases.

9. The vehicle body structure according to claim 8, wherein a front end of the inner rocker panel support beam is connected to a rocker panel beam of the lower rocker panel, and a rear end of the inner rocker panel support beam is connected to the C-pillar; and in the height direction of the vehicle, the rear end of the inner rocker panel support beam is higher than the front end of the inner rocker panel support beam.

10. The vehicle body structure according to claim 9, further comprising a first inner rocker panel support beam lower connector, wherein the first inner rocker panel support beam lower connector is connected between the inner rocker panel support beam and the rocker panel beam.

11. The vehicle body structure according to claim 10, further comprising a second inner rocker panel support beam lower connector, wherein the second inner rocker panel support beam lower connector is connected between the inner rocker panel support beam and the rocker panel beam, and in a front-rear direction of the vehicle, the second inner rocker panel support beam lower connector is disposed between the first inner rocker panel support beam lower connector and the C-pillar.

12. The vehicle body structure according to claim 11, wherein in the width direction of the vehicle, at least a part of the first inner rocker panel support beam lower connector is located between the inner rocker panel support beam and the rocker panel beam.

13. The vehicle body structure according to claim 11 or 12, wherein in the width direction of the vehicle, at least a part of the second inner rocker panel support beam lower connector is located between the inner rocker panel support beam and the rocker panel beam.

14. The vehicle body structure according to any one of claims 11 to 13, wherein the inner rocker panel support beam comprises at least one cavity extending in the front-rear direction of the vehicle.

15. The vehicle body structure according to any one of claims 11 to 14, wherein the first inner rocker panel support beam lower connector comprises at least one cavity extending in the front-rear direction of the vehicle, and the second inner rocker panel support beam lower connector comprises at least one cavity extending in the front-rear direction of the vehicle.

16. The vehicle body structure according to any one of claims 7 to 15, further comprising a side wall outer panel, wherein the side wall outer panel is disposed on one side of the rocker panel beam of the lower rocker panel away from the side wall inner panel, and the side wall outer panel is connected to the inner rocker panel sealing plate.

17. The vehicle body structure according to claim 16, further comprising a vehicle door, wherein the vehicle door is disposed on one side of the side wall outer panel away from the inner rocker panel sealing plate, the vehicle door is further provided with a door anti-collision beam, and a projection of the door anti-collision beam in the width direction of the vehicle at least partially overlaps a projection of the upper rocker panel in the width direction of the vehicle.

18. The vehicle body structure according to any one of claims 1 to 17, wherein in the height direction of the vehicle, at least a part of the upper rocker panel is higher than a seat cushion.

19. A vehicle, comprising the vehicle body structure according to any one of claims 1 to 18.
